# EUROPÄISCHE PATENTSCHRIFT

(11) **EP 0 814 566 B1**
(45) Veröffentlichungstag und Bekanntmachung des Hinweises auf die Patenterteilung: **04.10.2001**
(21) Anmeldenummer: 97109798.5
(22) Anmeldetag: 17.06.1997
(51) Int. Cl.: H04B 1/00

(54) **Rundfunkempfänger, insbesondere Autoradio, mit Fernsprecheinrichtung**
Radio receiver, especially car radio, with telephone
Récepteur de radiodiffusion, particulièrement autoradio, avec téléphone

(30) Priorität: 21.06.1996 DE 19624635
(43) Veröffentlichungstag der Anmeldung: 29.12.1997
(73) Patentinhaber: ROBERT BOSCH GMBH, 70442 Stuttgart (DE)
(72) Erfinder: Oberlaender, Ralf, 31139 Hildesheim (DE)

(56) Entgegenhaltungen:
- EP-A- 0 477 854
- DE-A- 3 726 784
- DE-A- 4 230 912
- DE-U- 29 605 543
- US-A- 5 134 717

## Beschreibung

### Stand der Technik

Die Erfindung geht von einem Rundfunkempfänger nach der Gattung des Hauptanspruchs aus.

Aus der DE 42 30 912 A1 ist ein Rundfunkempfänger mit einem Empfangsteil, einer Anzeigevorrichtung und Tasten zur Eingabe von Informationen bekannt, wobei die Tasten als 10er Tastatur ausgebildet sind. Der Rundfunkempfänger weist außerdem einen Speicher auf, in dem den empfangbaren Rundfunkstationen Zahlen zugeordnet sind. Die Zahlen stehen in einem festen Zusammenhang zu definierten Buchstaben des Alphabets, wobei jeder Ziffer der 10er Tastatur nicht mehr als drei Buchstaben zugeordnet sind. Nach Eingabe einer Zahlenkombination am Rundfunkempfänger wird der Sender eingestellt, dessen Empfang aufgrund der Eingabe gewünscht ist.

Aus der DE 37 26 784 A1 ist ein Autoradio mit mehreren Zusatzgeräten bekannt, wobei das Autoradio im Bereich des Armaturenbretts eines Kraftfahrzeuges angeordnet ist und die Zusatzgeräte z. B. aus einem Compakt-Kassettengerät, einem Compakt-Disc-Abspielgerät, einem Funktelefon, einem Diktiergerät, einem digitalen Kassetten-Aufzeichnungs-Wiedergabegerät und anderen Geräten bestehen können. Die Zusatzgeräte sind in ihren Hauptfunktionen über eine zentrale Bedieneinheit steuerbar. Die Bedieneinheit besteht im wesentlichen aus einem Tastenfeld, einem Funktionswahlschalter und mehreren, optischen Anzeigefeldern.

Über einen Funktionswahlschalter sind alle Zusatzgeräte anwählbar. Wird der Funktionswahlschalter in die Stellung "R" gebracht, so ist der Radiobereich eingeschaltet und im Anzeigefeld leuchten bezogen auf das Tastenfeld die Symbole auf, die für die Wellenbereichstasten, für die Programmtasten bzw. für die Stationstasten zuständig sind. In gleicher Weise geschieht das Erkennen und Eingeben der gewünschten Funktionen bei Aktivierung der eingesetzten Zusatzgeräte, z. B. wenn der Funktionswahlschalter in die Stellung "T"-Funktelefon gebracht wird, so erscheinen die erforderlichen Symbole im Anzeigefeld und kennzeichnen die Zehnertastatur zur Nummernwahl und die nötigen Tasten zum Aufbau des Funkweges.

Aus der DE 296 05 543 U1 ist eine Multifunktionstastatur bekannt, die im Radiobetrieb den Stationstastenspeicherblock und in der Betriebsart Telekommunikation die Wähltastatur und den Rufnummernspeicher bildet.

Der erfindungsgemäße Rundfunkempfänger mit den Merkmalen des Hauptanspruchs hat demgegenüber den Vorteil, daß durch eine Eingabe an der Zehnertastatur im Telefonbetrieb ein Aufruf des Speicherplatzes eines Kurzwahlspeichers erfolgt, daß für eine vorgegebene Anzahl von Speicherplätzen des Kurzwahlspeichers eine Kennzeichnung des Aufrufs eines dieser Speicherplätze lediglich durch Betätigung genau einer Taste der Zehnertastatur mindestens für eine erste vorgegebene Zeit erfolgt, daß nach Betätigung dieser Taste eine automatische Anwahl der im ausgewählten Speicherplatz gespeicherten Rufnummer erfolgt und daß für die restlichen Speicherplätze des Kurzwahlspeichers eine Kennzeichnung des Aufrufs eines dieser Speicherplätze durch Betätigung von mindestens zwei Tasten erfolgt. Auf diese Weise wird eine Schnellwahl ermöglicht.

Ein weiterer Vorteil besteht darin, daß durch eine Eingabe an der Zehnertastatur im Rundfunkempfangsbetrieb ein Aufruf von Stationstasten und/oder eine Direkteingabe der zu empfangenden Frequenz erfolgt und daß die Kennzeichnung einer Frequenzeingabe an der Zehnertastatur vorzugsweise durch Betätigung der Nulltaste an der Zehnertastur vor der Frequenzeingabe erfolgt. Durch die Direkteingabe der zu emfangenden Frequenz ist ein schneller Zugriff auf eine bekannte oder gerade abgelesene Frequenz, zum Beispiel bei Hinweisschildern auf der Autobahn möglich, ohne den Suchlauf starten zu müssen.

Als Vorteil ist auch anzusehen, daß die 10er Tastatur auch im Rundfunkempfangsbetrieb selbst multifunktional einsetzbar ist und sowohl der Direkteingabe der zu empfangenden Frequenz als auch dem Aufruf vom Stationstasten dienen kann. Auf diese Weise werden weitere Bedienelemente eingespart und die Übersichtlichkeit zusätzlich erhöht.

Durch die in den Unteransprüchen aufgeführten Maßnahmen sind vorteilhafte Weiterbildungen und Verbesserungen des im Hauptanspruch angegebenen Rundfunkempfängers möglich.

Besonders vorteilhaft ist die Verwendung der 10er Tastatur zur Eingabe von Speicherplätzen eines Kurzwahlspeichers. Somit wird auch im Telefonbetrieb die Funktionalität der 10er Tastatur erweitert, wodurch wiederum Bedienelemente eingespart werden und die Übersichtlichkeit für den Benutzer erhöht wird.

Vorteilhaft ist insbesondere die Verwendung der Anzeigevorrichtung des Rundfunkempfängers zur Darstellung des Inhaltes des Kurzwahlspeichers, wobei mit Hilfe einer Richtungstaste ein Speicherplatz auswählbar ist. Auf diese Weise findet eine Mehrfachnutzung der Anzeigevorrichtung sowohl für den Rundfunkbetrieb als auch für den Telefonbetrieb statt, wodurch ebenfalls die Übersichtlichkeit der Bedieneinheit erhöht und der Aufwand an Bedienelementen verringert wird.

Als Vorteil ist weiterhin anzusehen, daß bei Ausstattung des Rundfunkempfängers mit einem Kassettenlaufwerk und einem Kompakt-Disk-Spieler bzw. Kompakt-Disk-Wechsler die 10er Tastatur auch zur Bedienung dieser Baugruppen verwendet werden kann. Auch hier ergibt sich durch die erweiterte Funktionalität der 10er Tastatur eine Verbesserung in der Übersichtlichkeit der Bedienung und eine Einsparung bei den Herstellungskosten, da nicht für jede Baugruppe eigene Bedienelemente vorzusehen sind.

Eine vorteilhafte Erhöhung des Bedienungskomforts ergibt sich auch dadurch, daß den Tasten der 10er Tastatur jeweils mehrere alphanumerische Zeichen und/oder Sonderzeichen zugeordnet sind, wodurch mit Hilfe der 10er Tastatur auch eine Benamung von Sendern im Rundfunkempfangsbetrieb, von Kurzwahlspeicherplätzen im Telefonbetrieb und von Kompakt-Disks im Kompakt-Disk-Betrieb bzw. im Kompakt-Disk-Wechsler-Betrieb sowie die Eingabe einer Nachricht zur Übertragung mittels der Fernsprecheinrichtung möglich ist. Durch diese Maßnahmen läßt sich schließlich ein Maximum an Übersichtlichkeit bei einem Minimum an Bedienelemente- und Platzaufwand auf der Bedieneinheit realisieren. Durch diese Verbesserungen des Bedienkomforts läßt sich bei Verwendung des Rundfunkempfängers als Autoradio die Beeinträchtigung der Fahrsicherheit durch die Bedienung des Autoradios minimieren.

### Zeichnung

Ein Ausführungsbeispiel der Erfindung ist in der Zeichnung dargestellt und in der nachfolgenden Beschreibung näher erläutert. Es zeigen Figur 1 eine Bedieneinheit eines erfindungsgemäßen Rundfunkempfängers, Figur 2 eine erweiterte 10er Tastatur und Figur 3 die Aufteilung eines Kurzwahlspeichers auf den Speicherchip einer Telefonkarte und einen Speicher des Rundfunkempfängers.

### Beschreibung des Ausführungsbeispiels

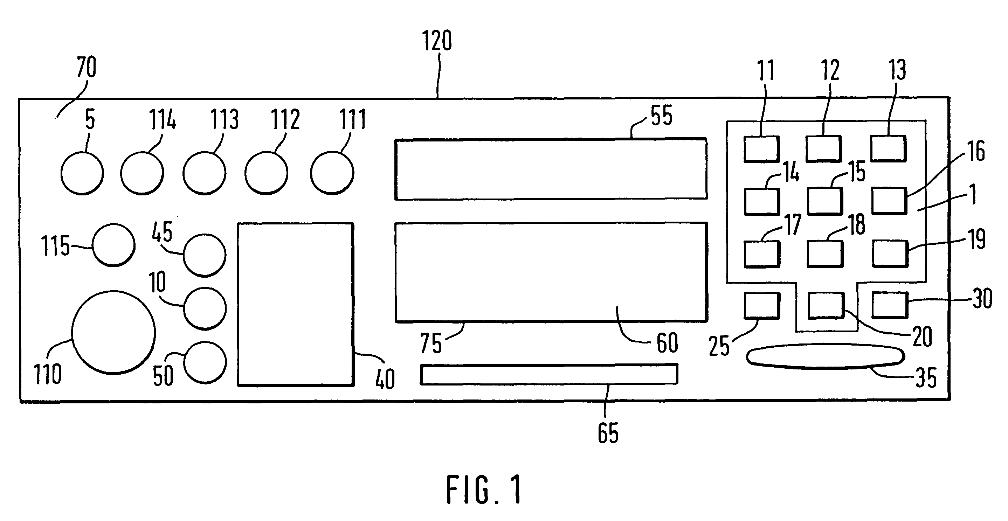

Der erfindungsgemäße Rundfunkempfänger ist im hier beschriebenen Ausführungsbeispiel als Autoradio ausgeführt. Die Funktionen des Rundfunkempfängers können durch Tastenkombinationen an einer Bedieneinheit 70 gemäß Figur 1 aktiviert werden. Eine Anzeigevorrichtung 75 zur Benutzerinformation und Bedienungsführung ist mit der Bedieneinheit 70 verbunden. Desweiteren umfaßt das Autoradio eine Fernsprecheinrichtung, ein Rundfunkempfangsteil, ein Kassettenlaufwerk, einen als Kompakt-Disk-Wechsler ausgebildeten Kompakt-Disk-Spieler und einen Speicher, der Kurzwahlspeicherplätze für den Telefonbetrieb und Speicherplätze für Stationstasten, Sendernamen und Namen für Kompakt-Disks enthält. Darüber hinaus sind im Speicher 85 weitere Informationen für den Betrieb des Rundfunkempfängers, wie beispielsweise Geräteeinstellungen für Klang und Lautstärke sowie Zugangsberechtigungscodes für einen oder mehrere Benutzer abspeicherbar. Die Bedieneinheit 70 und die Anzeigevorrichtung 75 sind zusammen in einer Bedienkonsole 120 untergebracht.

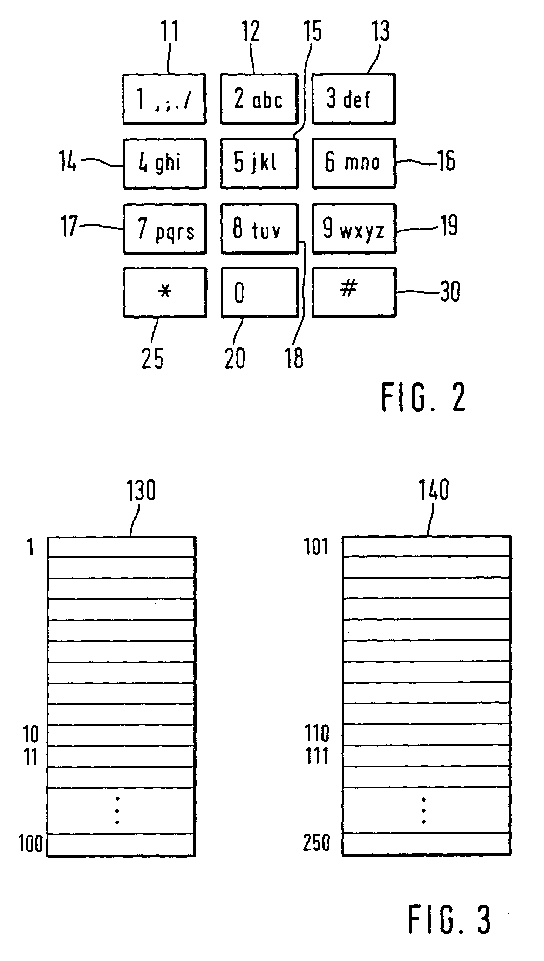

In Figur 1 ist die Bedienkonsole 120 des Rundfunkempfängers dargestellt. Dabei kennzeichnet 1 eine 10er Tastatur mit 10 numerischen Tasten 11, 12, ..., 20, deren Belegung Figur 2 entnehmbar ist. So kennzeichnet das Bezugszeichen 11 die erste Taste der 10er Tastatur 1 zur Eingabe einer 1, das Bezugszeichen 12 die zweite Taste der 10er Tastatur 1 zur Eingabe einer 2, das Bezugszeichen 13 die dritte Taste der 10er Tastatur 1 zur Eingabe einer 3, das Bezugszeichen 14 die vierte Taste der 10er Tastatur 1 zur Eingabe einer 4, das Bezugszeichen 15 die fünfte Taste der 10er Tastatur 1 zur Eingabe einer 5, das Bezugszeichen 16 die sechste Taste der 10er Tastatur 1 zur Eingabe einer 6, das Bezungszeichen 17 die siebte Taste der 10er Tastatur 1 zur Eingabe einer 7, das Bezungszeichen 18 die achte Taste der 10er Tastatur 1 zur Eingabe einer 8, das Bezugszeichen 19 die neunte Taste der 10er Tastatur 1 zur Eingabe einer 9 und das Bezugszeichen 20 die zehnte Taste der 10er Tastatur zur Eingabe einer 0. Den ersten neuen Tasten 11, 12, ..., 19 der 10er Tastatur 1 sind außerdem jeweils alphanumerische Zeichen und Sonderzeichen zugeordnet. So ist der ersten Taste 11 der 10er Tastatur 1 ein Komma, ein Strichpunkt, ein Punkt und ein Schrägstrich zugeordnet. Der zweiten Taste 12 der 10er Tastatur 1 sind die Buchstaben a, b, und c, der dritten Taste 13 der 10er Tastatur 1 die Buchstaben d, e und f, der vierten Taste 14 der 10er Tastatur 1 die Buchstaben g, h und i, der fünften Taste 15 der 10er Tastatur 1 die Buchstaben j, k und 1, der sechsten Taste 16 der 10er Tastatur 1 die Buchstaben m, n und o, der siebten Taste 17 der 10er Tastatur 1 die Buchstaben p, q, r und s, der achten Taste 18 der 10er Tastatur 1 die Buchstaben t, u und v, der neunten Taste 19 der 10er Tastatur 1 die Buchstaben w, x, y und z zugeordnet. Der 10er Tastatur 1 sind außerdem zwei nichtnumerische Hilfstasten 25 und 30 zugeordnet. Dabei ist die erste nichtnumerische Hilfstaste 25 die Sterntaste und die zweite nichtnumerische Hilfstaste 30 die Rautentaste, wie sie von einer Telefontastatur bekannt sind. Die beiden nichtnumerischen Hilfstasten 25 und 30 sind auch in Figur 2 dargestellt.

In Figur 1 kennzeichnet das Bezugszeichen 35 eine Ruftaste, nach deren Betätigung eine automatische Anwahl einer in einem ausgewählten Speicherplatz des Kurzwahlspeichers gespeicherten Rufnummer erfolgt. Das Bezugszeichen 55 kennzeichnet den Kassettenschacht für ein Kassettenlaufwerk, das Bezugszeichen 60 kennzeichnet ein Display der Anzeigevorrichtung 75, die mit der Bedieneinheit 70 zusammen die Bedienkonsole 120 bildet. Das Bezugszeichen 65 kennzeichnet einen Kartenleser zur Eingabe von Zugangsberechtigungs- und/oder Telefonkarten. Das Bezugszeichen 110 kennzeichnet den Lautstärkeregler des Rundfunkempfängers, der zugleich zum Ein- und Ausschalten dient. Das Bezugszeichen 115 kennzeichnet eine Taste zur Klangeinstellung, das Bezugszeichen 114 eine Verkehrsfunktaste, das Bezugszeichen 113 eine Taste für automatischen Sendersuchlauf, das Bezugszeichen 112 eine Taste für Rauschunterdrückung und das Bezugszeichen 111 eine Taste für Kassettenvor- und -rücklauf. Mit einer Menütaste 45 kann ein Auswahlmenü durch die Anzeigevorrichtung 75 auf dem Display 60 dargestellt werden. Außerdem ist eine Speichertaste 10 vorgesehen, über die Speicherplätze des Speichers aufgerufen und am Display 60 durch die Anzeigevorrichtung 75 angezeigt werden können. Zur Auswahl von Menüpunkten bzw. Speicherplätzen auf dem Display 60 dient eine Richtungstaste 40 die eine Cursorbewegung im Display 60 nach oben, nach unten, nach links und nach rechts ermöglicht und dazu als Schaltwippe mit horizonaler und vertikaler Kippachse ausgebildet ist. Eine Löschtaste 50 ermöglicht das Löschen von Einträgen im Display 60. Eine Auswahltaste 5 ermöglicht die Umschaltung zwischen der Fernsprecheinrichtung, dem Rundfunkempfangsteil, dem Kassettenlaufwerk und dem Kompakt-Disk-Spieler.

Im folgenden werden die Eingabemöglichkeiten an der in Figur 1 dargestellten Bedienkonsole 120 näher beschrieben. Nach Umschaltung auf Rundfunkempfangsbetrieb durch die Auswahltaste 5 lassen sich die Tasten 11, 12, ..., 20 der 10er Tastatur 1 als Stationstasten verwenden, so daß die Betätigung mindestens einer dieser Tasten den Aufruf eines entsprechenden Speicherplatzes im Speicher zur Folge hat, so daß der dort in Form von Frequenzinformationen gespeicherte Sender anschließend am Rundfunkempfangsteil eingestellt werden kann. Mit Hilfe der 10er Tastatur 1 ist jedoch auch eine Direkteingabe der zu empfangenden Frequenz möglich, so daß ohne vorherigen Speicheraufruf die eingegebene Frequenz direkt am Rundfunkempfangsteil eingestellt werden kann. Zur Unterscheidung der Eingabe von Stationstasten und der Frequenzeingabe ist vor der Frequenzeingabe eine 0 mit der zehnten Taste 20 der 10er Tastatur 1 einzugeben. Das bedeutet natürlich, daß die zehnte Taste 20 der 10er Tastatur 1 nur in Verbindung mit einer vorausgehenden Eingabe einer anderen Taste 11, 12, ..., 19 der 10er Tastatur 1 als Stationstaste verwendbar ist.

Nach Umschalten des Rundfunkempfängers auf Telefonbetrieb durch die Auswahltaste 5 läßt sich die 10er Tastatur 1 mit den ihr zugeordneten nichtnumerischen Hilfstasten 25 und 30 sowie der Ruftaste 35 als herkömmliche Telefontastatur, beispielsweise zur Eingabe einer Rufnummer benutzen. Weiterhin besteht die Möglichkeit, durch eine Eingabe an der 10er Tastatur 1 einen Speicherplatz eines Kurzwahlspeichers aufzurufen. Dabei ist der Kurzwahlspeicher entweder vollständig im Speicher untergebracht oder sowohl im Speicher als auch auf dem Speicherchip einer in den Kartenleser 65 eingeführten Telefonkarte. Denkbar wäre auch, den Kurzwahlspeicher vollständig auf dem Speicherchip einer in den Kartenleser 65 eingeführten Telefonkarte unterzubringen, so daß im Speicher kein Kurzwahlspeicher erforderlich wäre. Im hier beschriebenen Ausführungsbeispiel soll der Kurzwahlspeicher sowohl im Speicher als auch auf dem Speicherchip einer in den Kartenleser 65 eingeführten Telefonkarte untergebracht sein. Für den Aufruf eines Speicherplatzes des Kurzwahlspeichers sind mehrere Möglichkeiten vorgesehen. Zum einen besteht die Möglichkeit einer Schnellwahl. Im Fall der Schnellwahl können neun verschiedene Speicherplätze des Kurzwahlspeichers im Speicher sowie neun verschiedene Speicherplätze im Kurzwahlspeicher des Speicherchips einer in den Kartenleser 65 eingeführten Telefonkarte aufgerufen werden. Auf diese Weise muß nur eine Taste der 10er Tastatur 1 betätigt werden. Zur Kennzeichnung des Aufrufs des Speicherplatzes des Kurzwahlspeichers im Speicher durch Schnellwahl muß die entsprechende Taste der 10er Tastatur 1 mindestens für eine erste vorgegebene Zeit betätigt werden, beispielsweise länger als 2 Sekunden. Nach Betätigung der entsprechenden Taste der 10er Tastatur 1 findet dann eine automatische Anwahl der im ausgewählten Speicherplatz des Speichers gespeicherten Rufnummer statt. Soll die Schnellwahl für einen Speicherplatz des Kurzwahlspeichers auf dem Speicherchip einer in den Kartenleser 65 eingeführten Telefonkarte erfolgen, so ist vor Betätigung der entsprechenden Taste der 10er Tastatur 1 die erste nichtnumerische Hilfstaste 25 zu betätigen. Anschließend wird die entsprechende Taste der 10er Tastatur 1 wiederum für mindestens die erste vorgegebene Zeit gedrückt. Nach Betätigung der entsprechenden Taste der 10er Tastatur 1 erfolgt dann die automatische Anwahl der im ausgewählten Speicherplatz auf dem Speicherchip der Telefonkarte gespeicherten Rufnummer. Aufgrund der Kennzeichnung der Schnellwahl für Kurzwahlspeicherplätze auf dem Speicherchip der Telefonkarte durch vorherige Betätigung der ersten nichtnumerischen Hilfstaste 25 kann es auch vorgesehen sein, die Zeitvorgabe für die Betätigung der entsprechenden Taste der 10er Tastatur 1 nicht vorzusehen. Anstelle der ersten nichtnumerischen Hilfstaste 25 kann natürlich auch die zweite nichtnumerische Hilfstaste 30 zur Kennzeichnung der beschriebenen Schnellwahl vorgesehen sein.

In dem hier beschriebenen Ausführungsbeispiel sind unter Berücksichtigung des auf dem Speicherchip der in den Kartenleser 65 eingeführten Telefonkarte gespeicherten Kurzwahlziele insgesamt 250 Kurzwahlziele anwählbar. Dabei befinden sich die Speicherplätze 1 bis 100 im Kurzwahlspeicher 130 der Telefonkarte gemäß Figur 3. Die Speicherplätze 101 bis 250 befinden sich im Kurzwahlspeicher 140 des Speichers, wie ebenfalls der Figur 3 entnehmbar ist. Durch Schnellwahl sind also die Speicherplätze 1 bis 9 des Kurzwahlspeichers 130 der Telefonkarte und die Speicherplätze 101 bis 109 des Kurzwahlspeichers 140 im Speicher anwählbar. Die Speicherplätze 10 bis 100 des Kurzwahlspeichers 130 der Telefonkarte und die Speicherplätze 110 bis 250 des Kurzwahlspeichers 140 im Speicher sind nicht durch Schnellwahl aktivierbar, sondern erfordern zu ihrer Auswahl eine Betätigung der Speichertaste 10, wodurch der Inhalt beider Kurzwahlspeicher 130 und 140 am Display 60 der Anzeigevorrichtung 75 sichtbar wird. Die Auswahl eines Speicherplatzes erfolgt dann durch Betätigung der Richtungstaste 40, wodurch die beiden Kurzwahlspeicher 130 und 140 von kleineren zu größeren Speicherplatznummern bzw. umgekehrt vom Cursor durchlaufen werden können. Auch ein alphabetisches Durchlaufen der Kurzwahlspeicher 130 und 140 ist denkbar. Die Auswahl eines Speicherplatzes kann auch durch entsprechende Eingabe der Nummer des Speicherplatzes an der 10er Tastatur 1 erfolgen. Dabei springt der Cursor ebenfalls an die Nummer des gewählten Speicherplatzes. Da nicht alle Speicherplatznummern und deren zugehörige Speicherplatzinhalte am Display 60 der Anzeigevorrichtung 75 gleichzeitig dargestellt werden können, wird nur jeweils der im Bereich des Cursors liegende Ausschnitt dargestellt. Nach Betätigung der Ruftaste 35 findet eine automatische Anwahl der im ausgewählten und durch den Cursor gekennzeichneten Speicherplatz gespeicherten Rufnummer statt.

Die Auswahltaste 5 dient auch zur Auswahl des Kassettenlaufwerks und des Kompakt-Disk-Wechslers. Durch wiederholtes Drücken der Auswahltaste 5 läßt sich auf die gewünschte Betriebsart bzw. die gewünschte Baugruppe umschalten. Im Kassettenbetrieb erfolgt durch eine Eingabe an der 10er Tastatur 1 eine direkte Titelanwahl für eine im Kassettenlaufwerk befindliche Kassette. Dabei erfolgt die Aktivierung des gewählten Titels nach Ablauf einer zweiten vorgegebenen Zeit vom Zeitpunkt der Eingabe an der 10er Tastatur 1 an. Das bedeutet, daß bei zwei- oder mehrstelliger Nummerneingabe an der 10er Tastatur 1 der Zeitraum zwischen der Eingabe zweier aufeinanderfolgender Ziffern kürzer als die zweite vorgegebene Zeit sein muß. Um dies zu vermeiden, ist auch eine andere Kennzeichnung zweioder mehrstelliger Nummerneingaben denkbar. Eine zwei- oder mehrstellige Nummerneingabe kann beispielsweise durch die Betätigung einer der beiden nichtnumerischen Hilfstasten 25 und 30 eingeleitet und abgeschlossen werden, so daß die Aktivierung des gewählten Titels erst nach der zweiten Betätigung der entsprechenden nichtnumerischen Hilfstaste 25, 30 erfolgt.

Im Kompakt-Disk-Betrieb bzw. im Kompakt-Disk-Wechsler-Betrieb ist in gleicher Weise wie beim Kassettenbetrieb eine direkte Titelanwahl für eine im Kompakt-Disk-Laufwerk befindliche Kompakt-Disk möglich. Ist der Kompakt-Disk-Spieler wie im beschriebenen Ausführungsbeispiel als Kompakt-Disk-Wechsler ausgebildet, so kann durch Eingabe an der 10er Tastatur 1 im Kompakt-Disk-Wechsler-Betrieb eine direkte Anwahl einer im Kompakt-Disk-Wechsler befindlichen Kompakt-Disk durchgeführt werden. Herkömmliche Kompakt-Disk-Wechsler ermöglichen eine Auswahl von zehn verschiedenen Kompakt-Disks, so daß eine einfache Eingabe an der 10er Tastatur zur Auswahl der gewünschten Kompakt-Disk ausreicht. Zur Kennzeichnung der Anwahl einer Kompakt-Disk durch eine Betätigung der entsprechenden Taste der 10er Tastatur 1 muß diese Taste mindestens für eine dritte vorgegebene Zeit, wie beispielsweise 1 Sekunde, betätigt werden. Für den Fall, daß mehr als zehn Kompakt-Disks im Kompakt-Disk-Wechsler untergebracht sind und ausgewählt werden können, ist wiederum die auch für die Titelanwahl beschriebene Lösung des Einsatzes einer der beiden nichtnumerischen Hilfstasten 25 und 30 für den Fall von zwei- oder mehrstelliger Eingabe an der 10er Tastatur 1 denkbar, wobei zur Unterscheidung zwischen zwei- oder mehrstelliger Titelanwahl und zwei- oder mehrstelliger Anwahl einer Kompakt-Disk beispielsweise unterschiedliche nichtnumerische Hilfstasten verwendet werden können, d. h. für die Titelwahl die erste nichtnumerische Hilfstaste 25 und für die Kompakt-Disk-Wahl die zweite nichtnumerische Hilfstaste 30 oder bei Verwendung derselben nichtnumerischen Hilfstaste 25, 30 durch Betätigung der entsprechenden nichtnumerischen Hilfstaste 25, 30 nach Eingabe der zwei- oder mehrstelligen Zahl für die Wahl der Kompakt-Disk für mindestens eine vierte vorgegebene Zeit.

Wie bereits beschreiben, sind den Tasten der 10er Tastatur 1 jeweils mehrere alphanumerische Zeichen und Sonderzeichen zugeordnet. Wird im Rundfunkempfangsbetrieb die Menütaste 45 betätigt, so wird die 10er Tastatur 1 auf alphanumerische Eingabe umgeschaltet. Auf diese Weise ist eine Benamung des aktuell eingestellten Senders möglich. Dieser Name erscheint dann bei jedem Aufruf des Senders im Display 60. Die Benamung des Senders erfolgt dabei durch sequenzielle Eingabe alphanumerischer Zeichen und/oder Sonderzeichen, wobei die alphanumerischen Zeichen und/oder Sonderzeichen folgendermaßen eingegeben werden: Bei den Tasten 12, 13, 14, 15, 16 und 18 der 10er Tastatur 1, denen jeweils drei Buchstaben zugeordnet sind, wird mit dem ersten Tastendruck der erste Buchstabe, mit dem zweiten Tastendruck der zweite Buchstabe, mit dem dritten Tastendruck der dritte Buchstabe und mit dem vierten Tastendruck die Ziffer der entsprechenden Taste aktiviert. Bei weiterem Drücken der entsprechenden Taste wird die Zeichenfolge periodisch wiederholt. Bei den Tasten 11, 17 und 19 der 10er Tastatur 1, denen vier Buchstaben bzw. Sonderzeichen zugeordnet sind, erfolgt die Aktivierung der Zeichen entsprechend, wobei die Periodenlänge anstelle von vier Zeichen fünf Zeichen beträgt.

Wird die Menütaste 45 im Kompakt-Disk-Spieler- bzw. im Kompakt-Disk-Wechsler-Betrieb betätigt, so wird die 10er Tastatur 1 ebenfalls auf alphanumerische Eingabe umgeschaltet, so daß der gerade gehörten Kompakt-Disk ein beliebiger Name gegeben werden kann. Dieser Name erscheint dann bei jedem Abspielen der Kompakt-Disk im Display 60. Die Benamung erfolgt dabei durch sequenzielle Buchstabeneingabe gemäß der Beschreibung für die Benamung von Sendern. Durch erneute Betätigung der Menütaste 45 wird die Benamung des entsprechenden Senders bzw. der entsprechenden Kompakt-Disk abgeschlossen und gleichzeitig die 10er Tastatur 1 wieder auf numerische Eingabe umgeschaltet. In einem weiteren Ausführungsbeispiel kann durch Betätigen der Menütaste 45 eine Menüoberfläche im Display 60 angezeigt werden, die die Option Benamung von Sendern und die Option Benamung von Kompakt-Disks anbietet. Die gewünschte Option kann durch die Richtungstaste 40 ausgewählt und durch erneute Betätigung der Menütaste 45 aktiviert werden. Dabei wird dann auch in den entsprechenden Betriebsmodus umgeschaltet, ohne das dazu die Auswahltaste 5 betätigt werden müßte. Nach Abschluß der Benamung und anschließender Betätigung der Menütaste 45 wird dann zunächst auf die übergeordnete Menüebene mit den beiden Auswahloptionen verzweigt, die dann durch Betätigung der Löschtaste 50 verlassen wird, wobei gleichzeitig mit dem Betätigen der Löschtaste 50 die 10er Tastatur 1 auf numerische Eingabe umgeschaltet wird.

Zur Benamung von Kurzwahlspeicherplätzen ist eine erweiterte Funktionalität der Speichertaste 10 vorgesehen. Wird daher die Speichertaste 10 im Telefonbetrieb betätigt, so wird zunächst ein Auswahlmenü im Display 60 angezeigt. Es enthält die Option der alphabetischen Anzeige des Kurzwahlspeichers, der Anzeige des Kurzwahlspeichers nach fortlaufenden Nummern der Speicherplätze, die Option, Kurznachrichten über die Fernsprecheinrichtung zu übertragen und die Option, neue Kurzwahlspeicherplätze anzulegen und dabei ggf. bereits belegte Kurzwahlspeicherplätze zu überschreiben. Die Auswahl von Kurzwahlspeicherplätzen nach den beiden erstgenannten Optionen erfolgt mit Hilfe der Richtungstaste 40 und/oder durch Zifferneingabe an der 10er Tastatur 1 wie bereits beschrieben. Die Optionen werden mit Hilfe der Richtungstaste 40 ausgewählt und durch erneutes Betätigen der Speichertaste 10 aktiviert. Wird die Option gewählt, neue Kurzwahlspeicherplätze anzulegen, so wird bei Aktivierung dieser Option durch Betätigen der Speichertaste 10 gleichzeitig die 10er Tastatur 1 auf alphanumerische Eingabe umgeschaltet. Mit Hilfe der Richtungstaste 40 wird dann der gewünschte Speicherplatz ausgewählt und mit dem Kurzwahlziel überschrieben, wobei das Kurzwahlziel sowohl die Rufnummer als auch den Namen des mit dieser Rufnummer erreichbaren Teilnehmers beinhalten kann. Durch Betätigen der Speichertaste 10 werden die geänderten Speicherplatzinhalte im Speicher abgelegt und die Menüebene verlassen. Gleichzeitig wird die 10er Tastatur 1 wieder auf numerische Eingabe umgeschaltet. Im Display 60 ist wieder die übergeordnete Menüebene mit den vier genannten Optionen sichtbar, die durch Betätigung der Löschtaste 50 verlassen werden kann. Bei Auswahl der dritten Option zur Eingabe von über die Fernsprecheinrichtung zu übertragenden Kurznachrichten und Aktivierung durch die Speichertaste 10 wird die 10er Tastatur 1 ebenfalls auf alphanumerische Eingabe umgeschaltet. Durch entsprechende Eingabe von alphanumerischen Zeichen und/oder Sonderzeichen an der 10er Tastatur 1 kann eine Nachricht erstellt werden. Sie wird wie auch die Benamung von Sendern, von Kompakt-Disks und von Kurzwahlspeicherplätzen im Display 60 der Anzeigevorrichtung 75 editiert. Dabei ist das Löschen von alphanumerischen Zeichen und/oder Sonderzeichen in allen genannten Fällen möglich, indem mit der Richtungstaste 40 die zu löschende Stelle markiert wird und die Löschung dieser Stelle durch Betätigung der Löschtaste 50 erfolgt. In allen genannten Fällen wird die alphanumerische Eingabe von Buchstaben und/oder Sonderzeichen durch Einfach- bzw. Mehrfachbetätigung der entsprechenden Taste der 10er Tastatur 1 wie bei der Benamung von Sendern beschrieben durchgeführt. Nach Eingabe der zu versendenden Nachricht im Display 60 wird die Speichertaste 10 betätigt. Dadurch wird die 10er Tastatur 1 wieder auf numerische Eingabe umgeschaltet. Gleichzeitig wird die eingegebene Nachricht im Speicher abgelegt. Das Menü kann auf die oben für die Benamung von Kurzwahlspeicherplätzen beschriebene Weise verlassen werden. Wird nun an der 10er Tastatur 1 eine Rufnummer eingegeben, so wird nach erfolgreichem Verbindungsaufbau die im Speicher abgelegte Nachricht an den angewählten Teilnehmer über die Fernsprecheinrichtung gesendet. Bei Eingabe neuer Nachrichten wird jeweils die alte Nachricht im Speicher durch die aktuelle Nachricht überschrieben.

## Patentansprüche

1. Rundfunkempfänger, insbesondere Autoradio, mit einem Rundfunkempfangsteil und Tasten zur Eingabe von Informationen, wobei die Tasten teilweise als Zehnertastatur (1) ausgebildet sind, mit einer Fernsprecheinrichtung, und mit einer Auswahltaste (5) zur Umschaltung zwischen einem Telefon- und einem Rundfunkempfangsbetrieb, **dadurch gekennzeichnet, daß** durch eine Eingabe an der Zehnertastatur (1) im Rundfunkempfangsbetrieb eine Direkteingabe der zu empfangenden Frequenz und/oder ein Aufruf von Stationstasten erfolgt, **daß** die Kennzeichnung einer Frequenzeingabe an der Zehnertastatur (1) vorzugsweise durch Betätigung der Nulltaste (20) an der Zehnertastatur (1) vor der Frequenzeingabe erfolgt, **daß** durch eine Eingabe an der Zehnertastatur (1) im Telefonbetrieb ein Aufruf des Speicherplatzes eines Kurzwahlspeichers erfolgt, **daß** für eine vorgegebene Anzahl von Speicherplätzen des Kurzwahlspeichers eine Kennzeichnung des Aufrufs eines dieser Speicherplätze lediglich durch Betätigung genau einer Taste (11, 12, ..., 20) der Zehnertastatur (1) mindestens für eine erste vorgegebene Zeit erfolgt, **daß** nach Betätigung dieser Taste (11, 12, ..., 20) eine automatische Anwahl der im ausgewählten Speicherplatz gespeicherten Rufnummer erfolgt und **daß** für die restlichen Speicherplätze des Kurzwahlspeichers eine Kennzeichnung des Aufrufs eines dieser Speicherplätze durch Betätigung von mindestens zwei Tasten erfolgt.

2. Rundfunkempfänger nach Anspruch 1, **dadurch gekennzeichnet, daß** der Zehnertastatur (1) mindestens eine nichtnumerische Hilfstaste (25, 30) zugeordnet ist, **daß** eine Kennzeichnung des Aufrufs eines der restlichen Speicherplätze des Kurzwahlspeichers durch Betätigung zuerst der nichtnumerischen Hilfstaste (25, 30) und anschließend durch Betätigung einer Taste (11, 12,..., 20) der Zehnertastatur (1), vorzugsweise für mindestens die erste vorgegebene Zeit, erfolgt und **daß** nach Betätigung der Taste (11, 12, ..., 20) der Zehnertastatur (1) eine automatische Anwahl der im ausgewählten Speicherplatz gespeicherten Rufnummer erfolgt.

3. Rundfunkempfänger nach Anspruch 1 oder 2, **dadurch gekennzeichnet, daß** eine Speichertaste (10) vorgesehen ist, durch deren Betätigung der Inhalt des Kurzwahlspeichers an einer Anzeigevorrichtung (75) des Rundfunkempfängers angezeigbar ist, **daß** durch anschließende Betätigung mindestens einer Richtungstaste (40) und/oder eine Eingabe an der Zehnertastatur (1) die Auswahl eines Speicherplatzes erfolgt, **daß** eine Ruftaste (35) vorgesehen ist und **daß** nach Betätigung der Ruftaste (35) eine automatische Anwahl der im ausgewählten Speicherplatz gespeicherten Rufnummer erfolgt.

4. Rundfunkempfänger nach Anspruch 1, 2 oder 3, **dadurch gekennzeichnet, daß** durch eine Eingabe an der Zehnertastatur (1) im Rundfunkempfangsbetrieb eine Direkteingabe der zu empfangenden Frequenz erfolgt.

5. Rundfunkempfänger nach Anspruch 4, **dadurch gekennzeichnet, daß** eine Kennzeichnung einer Frequenzeingabe an der Zehnertastatur (1) durch Betätigung der Nulltaste (20) an der Zehnertastatur (1) vor der Frequenzeingabe erfolgt.

6. Rundfunkempfänger nach einem der vorherigen Ansprüche, **dadurch gekennzeichnet, daß** durch eine Eingabe an der Zehnertastatur (1) im Telefonbetrieb eine Eingabe einer Rufnummer erfolgt.

7. Rundfunkempfänger nach einem der vorherigen Ansprüche, **dadurch gekennzeichnet, daß** der Rundfunkempfänger ein Kassetten-Laufwerk umfaßt, **daß** eine Umschaltung zwischen Kassettenbetrieb und anderen Funktionen des Rundfunkempfängers durch die Auswahltaste (5) erfolgt und **daß** durch eine Eingabe an der Zehnertastatur (1) im Kassettenbetrieb eine direkte Titelanwahl für eine im Kassettenlaufwerk befindliche Kassette erfolgt.

8. Rundfunkempfänger nach einem der vorherigen Ansprüche, **dadurch gekennzeichnet, daß** das Rundfunkempfänger einen Compact-Disc-Spieler umfaßt und **daß** eine Umschaltung zwischen Compact-Disc-Betrieb und anderen Funktionen des Rundfunkempfängers durch die Auswahltaste (5) erfolgt und **daß** durch eine Eingabe an der Zehnertastatur (1) im Compact-Disc-Betrieb eine direkte Titelanwahl für eine im Compact-Disc-Laufwerk befindliche Compact-Disc erfolgt.

9. Rundfunkempfänger nach einem der vorherigen Ansprüche, **dadurch gekennzeichnet, daß** der Rundfunkempfänger mit einem Compact-Disc-Wechsler verbunden ist, **daß** eine Umschaltung zwischen Compact-Disc-Wechsler-Betrieb und anderen Funktionen des Rundfunkempfängers durch die Auswahltaste (5) erfolgt, **daß** durch eine Eingabe an der Zehnertastatur (1) im Compact-Disc-Wechsler-Betrieb eine direkte Anwahl einer im Compact-Disc- Wechsler befindlichen Compact-Disc und/oder eine direkte Titelanwahl für eine im Compact-Disc-Laufwerk befindliche Compact-Disc erfolgt und **daß** eine Kennzeichnung der Anwahl einer Compact-Disc durch eine Betätigung der entsprechenden Taste (11, 12, ..., 20) der Zehnertastatur (1) mindestens für eine weitere vorgegebene Zeit erfolgt.

10. Rundfunkempfänger nach einem der vorherigen Ansprüche, **dadurch gekennzeichnet, daß** Tasten (11, 12, ..., 19) der Zehnertastatur (1) jeweils mehrere alphanumerische Zeichen und/oder Sonderzeichen zugeordnet sind, wobei das gewünschte Zeichen durch Einfach- oder Mehrfachbetätigung der entsprechenden Taste (11, 12, ..., 19) auswählbar ist und **daß** mindestens eine Taste (10, 45) zur Umschaltung der Zehnertastatur (1) zwischen alphanumerischer Eingabe und numerischer Eingabe vorgesehen ist.

11. Rundfunkempfänger nach Anspruch 10, **dadurch gekennzeichnet, daß** durch eine Eingabe von alphanumerischen Zeichen an der Zehnertastatur (1) im Rundfunkempfangsbetrieb eine Benamung mindestens eines Senders erfolgt.

12. Rundfunkempfänger nach Anspruch 10 oder 11, **dadurch gekennzeichnet, daß** durch eine Eingabe von alphanumerischen Zeichen an der Zehnertastatur (1) im Telefonbetrieb eine Benamung mindestens eines Kurzwahlspeicherplatzes erfolgt.

13. Rundfunkempfänger nach Anspruch 8 oder 9 und 10, 11 oder 12, **dadurch gekennzeichnet, daß** durch eine Eingabe von alphanumerischen Zeichen an der Zehnertastatur (1) im Compact-Disc-Betrieb und/oder im Compact-Disc-Wechsler-Betrieb eine Benamung mindestens einer Compact-Disc erfolgt.

14. Rundfunkempfänger nach einem der Ansprüche 10 bis 13, **dadurch gekennzeichnet, daß** durch Eingabe von alphanumerischen Zeichen an der Zehnertastatur (1) im Telefonbetrieb die Erstellung einer Nachricht erfolgt, die durch anschließende Umschaltung der Zehnertastatur (1) auf numerische Eingabe und durch Eingabe einer Rufnummer absendbar ist.

## Claims

1. Radio receiver, in particular car radio, having a radio reception part and keys for entering information, some of the keys being in the form of a decimal keypad (1), having a telephone facility, and having a selection key (5) for changing over between a telephone mode and a radio reception mode, **characterized in that** an entry on the decimal keypad (1) in the radio reception mode directly enters the frequency which is to be received and/or retrieves station keys, **in that** a frequency entry on the decimal keypad (1) is preferably **characterized by** actuation of the zero key (20) on the decimal keypad (1) before the frequency is entered, in that an entry on the decimal keypad (1) in the telephone mode retrieves the memory location in a call number memory, in that, for a prescribed number of memory locations in the call number memory, the retrieval of one of these memory locations is **characterized** merely by actuation of precisely one key (11, 12, ..., 20) on the decimal keypad (1) at least for a first prescribed time, in that, when this key (11, 12, ..., 20) has been actuated, the call number stored in the selected memory location is automatically dialled, and in that, for the rest of the memory locations in the call number memory, the retrieval of one of these memory locations is **characterized by** actuation of at least two keys.

2. Radio receiver according to Claim 1, **characterized in that** the decimal keypad (1) has at least one nonnumeric auxiliary key (25, 30) associated with it, **in that** the retrieval of one of the remaining memory locations in the call number memory is **characterized by** actuation of the nonnumeric auxiliary key (25, 30) first and then by actuation of a key (11, 12, ..., 20) on the decimal keypad (1), preferably for at least the first prescribed time, and in that, when the key (11, 12, ..., 20) on the decimal keypad (1) has been actuated, the call number stored in the selected memory location is automatically dialled.

3. Radio receiver according to Claim 1 or 2, **characterized in that** a memory key (10) is provided whose actuation permits the content of the call number memory to be displayed on a display apparatus (75) of the radio receiver, **in that** subsequent actuation of at least one direction key (40) and/or entry on the decimal keypad (1) select(s) a memory location, **in that** a call key (35) is provided, and **in that**, when the call key (35) has been actuated, the call number stored in the selected memory location is automatically dialled.

4. Radio receiver according to Claim 1, 2 or 3, **characterized in that** an entry on the decimal keypad (1) in the radio reception mode directly enters the frequency which is to be received.

5. Radio receiver according to Claim 4, **characterized in that** entry of a frequency on the decimal keypad (1) is **characterized by** actuation of the zero key (20) on the decimal keypad (1) before the frequency is entered.

6. Radio receiver according to one of the preceding claims, **characterized in that** an entry on the decimal keypad (1) in the telephone mode enters a call number.

7. Radio receiver according to one of the preceding claims, **characterized in that** the radio receiver comprises a cassette drive, **in that** changeover between cassette mode and other functions of the radio receiver is effected using the selection key (5), and **in that** an entry on the decimal keypad (1) in the cassette mode directly selects a title for a cassette located in the cassette drive.

8. Radio receiver according to one of the preceding claims, **characterized in that** the radio receiver comprises a compact disc player, and **in that** changeover between compact disc mode and other functions of the radio receiver is effected using the selection key (5), and **in that** an entry on a decimal keypad (1) in the compact disc mode directly selects a title for a compact disc located in the compact disc drive.

9. Radio receiver according to one of the preceding claims, **characterized in that** the radio receiver is connected to a compact disc changer, **in that** changeover between compact disc changer mode and other functions of the radio receiver is effected using the selection key (5), **in that** an entry on the decimal keypad (1) in the compact disc changer mode directly selects a compact disc located in the compact disc changer and/or directly selects a title for a compact disc located in the compact disc drive, and **in that** the selection of a compact disc is **characterized by** actuation of the appropriate key (11, 12, ..., 20) on the decimal keypad (1) at least for a further prescribed time.

10. Radio receiver according to one of the preceding claims, **characterized in that** keys (11, 12, ..., 19) on the decimal keypad (1) each have a plurality of alphanumeric characters and/or special characters associated with them, and the desired character can be selected by actuating the appropriate key (11, 12, ..., 19) once or a plurality of times, and **in that** at least one key (10, 45) is provided for changing over the decimal keypad (1) between alphanumeric entry and numeric entry.

11. Radio receiver according to Claim 10, **characterized in that** entry of alphanumeric characters on the decimal keypad (1) in the radio reception mode names at least one transmitter.

12. Radio receiver according to Claim 10 or 11, **characterized in that** entry of alphanumeric characters on the decimal keypad (1) in the telephone mode names at least one call number memory location.

13. Radio receiver according to Claim 8 or 9 and 10, 11 or 12, **characterized in that** entry of alphanumeric characters on the decimal keypad (1) in the compact disc mode and/or in the compact disc changer mode names at least one compact disc.

14. Radio receiver according to one of Claims 10 to 13, **characterized in that** entry of alphanumeric characters on the decimal keypad (1) in the telephone mode composes a message which can be transmitted by subsequently changing over the decimal keypad (1) to numeric entry and by entering a call number.

## Revendications

1. Récepteur radiophonique, notamment autoradio comprenant :
- une partie récepteur radio et des touches pour entrer des informations,
- les touches étant en partie réalisées sous la forme d'un clavier décimal (1),
- une installation téléphonique et une touche de sélection (5) pour commuter entre le mode de fonctionnement téléphonique et le mode de récepteur radio,
**caractérisé en ce que**
- par une entrée sur le clavier décimal (1) en mode radio, on a une entrée directe pour la fréquence à recevoir et/ou un appel de touches de station,
- la caractéristique d'une entrée de fréquence sur le clavier décimal (1) se fait de préférence par l'actionnement de la touche zéro (20) sur le clavier décimal (1) avant l'entrée de la fréquence,
- par une entrée sur le clavier décimal (1) en mode téléphonique, on a un appel de l'emplacement de mémoire d'une mémoire de sélection abrégée,
- pour un nombre prévu d'emplacements de mémoire de la mémoire de sélection abrégée, on a une caractéristique de l'appel de l'un de ces emplacements de mémoire uniquement par l'actionnement précis d'une touche (11, 12, ..., 20) du clavier décimal (1) au moins pendant un premier temps prédéterminé,
- après l'actionnement de cette touche (11, 12, ..., 20), on a un appel automatique du numéro d'appel enregistré à l'emplacement de mémoire sélectionné, et
- pour les emplacements de mémoire restants dans la mémoire de sélection abrégée, on a une caractéristique de l'appel de l'un de ces emplacements de mémoire par l'actionnement d'au moins deux touches.

2. Récepteur radiophonique selon la revendication 1,
**caractérisé en ce que**
- le clavier décimal (1) comporte au moins une touche auxiliaire (25, 30) non numérique,
- une caractéristique de l'appel de l'un des emplacements de mémoire, restants dans la mémoire de sélection abrégée se fait par l'actionnement d'abord de la touche auxiliaire non numérique (25, 30), puis par actionnement d'une touche (11, 12, ..., 20) du clavier décimal (1), de préférence pendant un premier temps prédéterminé, et
- après l'actionnement de la touche (11, 12, ..., 20) du clavier décimal (1), on a une sélection automatique du numéro d'appel mémorisé à l'emplacement sélectionné de la mémoire.

3. Récepteur radiophonique selon l'une quelconque des revendications 1 ou 2,
**caractérisé par**
- une touche de mémoire (10) dont l'actionnement affiche le contenu de la mémoire de sélection abrégée sur un dispositif d'affichage (75) du récepteur radiophonique,
- la sélection d'un emplacement de mémoire par l'actionnement suivant d'au moins une touche de direction (40) et/ou par une entrée sur le clavier décimal (1), et
- une touche d'appel (35), dont l'actionnement produit une sélection automatique du numéro d'appel enregistré à l'emplacement de mémoire sélectionné.

4. Récepteur radiophonique selon l'une quelconque des revendications 1, 2 ou 3,
**caractérisé en ce que**
par une entrée sur le clavier décimal (1) en mode de fonctionnement de réception radio, on a une entrée directe de la fréquence à recevoir.

5. Récepteur radiophonique selon la revendication 4,
**caractérisé en ce qu'**
une caractéristique d'entrée de fréquence sur le clavier décimal (1) se fait par l'actionnement de la touche zéro (20) sur le clavier décimal (1) avant l'entrée de la fréquence.

6. Récepteur radiophonique selon l'une quelconque des revendications 1 à 5,
**caractérisé en ce que**
par une entrée sur le clavier décimal (1) en mode téléphonique, on introduit un numéro d'appel.

7. Récepteur radiophonique selon l'une quelconque des revendications 1 à 6,
**caractérisé en ce que**
- le récepteur radio comprend un lecteur de cassette et la commutation entre le mode cassette et les autres fonctions du récepteur radio se fait par la touche de sélection (5), et
- par une entrée sur le clavier décimal (1) en mode de lecture de cassette, on a une sélection directe du titre de la cassette placée dans le lecteur de cassette.

8. Récepteur radiophonique selon l'une quelconque des revendications 1 à 7,
**caractérisé en ce que**
le récepteur radio comprend un lecteur de disque compact et une commutation entre le mode de fonctionnement en disque compact et d'autres fonctions du récepteur radio se fait par la touche de sélection (5), et par une entrée sur le clavier décimal (1) dans le mode de fonctionnement à disque compact, on a une sélection directe du titre pour le disque compact placé dans le lecteur de disque.

9. Récepteur radiophonique selon l'une quelconque des revendications 1 à 8,
**caractérisé en ce que**
- le récepteur radiophonique est relié à un changeur de disque compact,
- une commutation entre le mode de fonctionnement à disque compact et les autres fonctions du récepteur radio se fait par la touche de sélection (5),
- par une entrée au niveau du clavier décimal (1) en mode de fonctionnement du changeur de disque compact, on a une sélection directe de disque compact se trouvant dans le changeur de disque compact et/ou une sélection directe de titre pour un disque compact qui se trouve dans le mécanisme de disque compact, et
- une caractéristique de choix d'un disque compact a lieu par un actionnement de la touche correspondante (11, 12, ..., 20) du clavier décimal (1), au moins pour un autre temps prédéterminé.

10. Récepteur radiophonique selon l'une quelconque des revendications 1 à 9,
**caractérisé en ce que**
les touches (11, 12,..., 19) du clavier (1) sont associées chaque fois à plusieurs signes alphanumériques et/ou signes particuliers, le signe souhaité se sélectionnant par un actionnement simple ou répété des touches correspondantes (11, 12, ..., 19), et au moins une touche (10, 45) est prévue pour commuter le clavier décimal (1) entre les entrées alphanumériques et les entrées numériques.

11. Récepteur radiophonique selon la revendication 10,
**caractérisé en ce que**
par une entrée de signes alphanumériques à l'aide du clavier décimal (1) en mode radiophonique, on désigne au moins un émetteur.

12. Récepteur radiophonique selon l'une des revendications 10 ou 11,
**caractérisé en ce que**
par une entrée de signes alphanumériques par le clavier décimal (1) en mode de téléphone, on désigne au moins un emplacement de mémoire de sélection abrégée.

13. Récepteur radiophonique selon l'une quelconque des revendications 8 ou 9 et 10, 11 ou 12,
**caractérisé en ce que**
par une entrée de signes alphanumériques par le clavier décimal (1) en mode de disque compact et/ou de changeur de disque compact, on désigne au moins un disque compact.

14. Récepteur radiophonique selon l'une quelconque des revendications 10 à 13,
**caractérisé en ce que**
par l'entrée de signes alphanumériques par le clavier décimal (1) en mode téléphonique, on établit une information qui peut être émise par commutation consécutive du clavier décimal (1) sur les entrées numériques et par une entrée d'un numéro d'appel.
